(19) **Europäisches Patentamt**
**European Patent Office**
**Office européen des brevets**

(11) **EP 4 148 831 A1**

(12) **EUROPEAN PATENT APPLICATION**
published in accordance with Art. 153(4) EPC

(43) Date of publication:
**15.03.2023 Bulletin 2023/11**

(21) Application number: **21799738.6**

(22) Date of filing: **27.04.2021**

(51) International Patent Classification (IPC):
***H01M 4/505*** (2010.01)      ***H01M 4/525*** (2010.01)

(52) Cooperative Patent Classification (CPC):
**C01G 53/00; H01M 4/505; H01M 4/525;**
**Y02E 60/10**

(86) International application number:
**PCT/JP2021/016771**

(87) International publication number:
**WO 2021/225094 (11.11.2021 Gazette 2021/45)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **07.05.2020  JP 2020082107**

(71) Applicants:
• **SUMITOMO CHEMICAL COMPANY, LIMITED**
**Tokyo 103-6020 (JP)**

• **Tanaka Chemical Corporation**
**Fukui-shi, Fukui 910-3131 (JP)**

(72) Inventor: **NAGAO, Daisuke**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **POSITIVE ELECTRODE ACTIVE MATERIAL PRECURSOR FOR LITHIUM SECONDARY BATTERY, METHOD FOR PRODUCING POSITIVE ELECTRODE ACTIVE MATERIAL PRECURSOR FOR LITHIUM SECONDARY BATTERY, AND METHOD FOR PRODUCING POSITIVE ELECTRODE ACTIVE MATERIAL FOR LITHIUM SECONDARY BATTERY**

(57)    A positive electrode active material precursor for a lithium secondary battery containing at least Ni, in which $S/D_{50}$ that is a ratio of a BET specific surface area S to a 50% cumulative volume particle size $D_{50}$ is $2 \times 10$ to $20 \times 10^6$ m/g, and, in powder X-ray diffraction measurement using a CuKα ray, A/B that is a ratio of an integrated intensity A of a diffraction peak within a range of $2\theta = 37.5 \pm 1°$ to an integrated intensity B of a diffraction peak within a range of $2\theta = 62.8 \pm 1°$ is more than 0.80 and 1.33 or less.

**Description**

[Technical Field]

The present invention relates to a positive electrode active material precursor for a lithium secondary battery, a method for producing a positive electrode active material precursor for a lithium secondary battery, and a method for producing a positive electrode active material for a lithium secondary battery.
Priority is claimed on Japanese Patent Application No. 2020-082107, filed in Japan on May 7, 2020, the content of which is incorporated herein by reference.

[Background Art]

A positive electrode active material for a lithium secondary battery is in use for a positive electrode of a lithium secondary battery. Attempts of putting lithium secondary batteries into practical use not only for small-sized power sources in mobile phone applications, notebook personal computer applications, and the like but also for medium-sized or large-sized power sources in automotive applications, power storage applications, and the like have already been underway.
The crystal structure of a positive electrode active material for a lithium secondary battery is involved in the desorption of lithium from a positive electrode during charging and the insertion of lithium during discharging. In order to improve the battery characteristics of lithium secondary batteries, attempts of controlling the crystal structure of a positive electrode active material for a lithium secondary battery is underway.
For example, Patent Document 1 discloses, for the object of providing a secondary battery having good electrical characteristics, a method in which a nickel cobalt manganese composite hydroxide, which is a precursor of a positive electrode active material, is densified and the densified composite hydroxide is mixed and calcined with a lithium compound to produce a positive electrode active material.

[Citation List]

[Patent Document]

[Patent Document 1]
JP-A-2010-15959

[Summary of Invention]

[Technical Problem]

There is still room for improvement in positive electrode active materials for lithium secondary batteries in order to further improve discharge rate characteristics.
The present invention has been made in view of the above-described circumstances, and an object of the present invention is to provide a positive electrode active material precursor for a lithium secondary battery that improves the discharge rate characteristics of lithium secondary batteries, a method for producing a positive electrode active material precursor for a lithium secondary battery, and a method for producing a positive electrode active material for a lithium secondary battery in which this positive electrode active material precursor for the lithium secondary battery is used.

[Solution to Problem]

The present invention has the following aspects.

[1] A positive electrode active material precursor for a lithium secondary battery containing at least Ni, in which $S/D_{50}$ that is a ratio of a BET specific surface area S to a 50% cumulative volume particle size $D_{50}$ is $2 \times 10^6$ to $20 \times 10^6$ m/g, and, in powder X-ray diffraction measurement using a CuKα ray, A/B that is a ratio of an integrated intensity A of a diffraction peak within a range of $2\Theta = 37.5 \pm 1°$ to an integrated intensity B of a diffraction peak within a range of $2\Theta = 62.8 \pm 1°$ is more than 0.80 and 1.33 or less.
[2] The positive electrode active material precursor for the lithium secondary battery according to [1], in which, in the powder X-ray diffraction measurement using the CuKα ray, C/D that is a ratio of a half-width value C of a diffraction peak within a range of $2\Theta = 43.5 \pm 1°$ to a half-width value D of a diffraction peak within a range of $2\Theta = 62.8 \pm 1°$ is 0.80 to 1.05.

[3] The positive electrode active material precursor for the lithium secondary battery according to [1] or [2], in which the BET specific surface area is 6 to 45 $m^2/g$.

[4] The positive electrode active material precursor for the lithium secondary battery according to any one of [1] to [3], in which the 50% cumulative volume particle size $D_{50}$ is 2 to 10 $\mu m$.

[5] The positive electrode active material precursor for the lithium secondary battery according to any one of [1] to [4], in which, in a mole ratio represented by the following formula (I), Ni and one or more elements selected from the group consisting of Co, Mn, and M1 are contained, and the M1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.

$$Ni:Co:Mn:M1 = (1 - y - z - w):y:z:w \ ... \qquad (I)$$

The formula (1) satisfies $0 \le y < 0.4$, $0 \le z \le 0.4$, $0 \le w \le 0.1$, and $0 < y + z + w$.

[6] A method for producing a positive electrode active material precursor for a lithium secondary battery, the method including heating a metal composite hydroxide containing at least Ni and having a tap density of 0.60 to 2.0 $g/cm^3$ or less at 400 to 700°C.

[7] The method for producing the positive electrode active material precursor for the lithium secondary battery according to [6], in which a 50% cumulative volume particle size $D_{50}$ of the metal composite hydroxide is 2 $\mu m$ or more and less than 10 $\mu m$.

[8] The method for producing the positive electrode active material precursor for the lithium secondary battery according to [6] or [7], in which the metal composite hydroxide contains Ni and one or more elements selected from the group consisting of Co, Mn, and M1 in a mole ratio represented by the following formula (I), and the M1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.

$$Ni:Co:Mn:M1 = (1 - y - z - w):y:z:w \ ... \qquad (I)$$

The formula (I) satisfies $0 \le y \le 0.4$, $0 \le z \le 0.4$, $0 \le w \le 0.1$, and $0 < y + z + w$.

[9] A method for producing a positive electrode active material for a lithium secondary battery, the method including mixing the positive electrode active material precursor for the lithium secondary battery according to any one of [1] to [5] and a lithium compound to obtain a mixture and calcining the mixture.

[Advantageous Effects of Invention]

According to the present invention, it is possible to provide a positive electrode active material precursor for a lithium secondary battery that improves the discharge rate characteristics of lithium secondary batteries, a method for producing a positive electrode active material precursor for a lithium secondary battery, and a method for producing a positive electrode active material for a lithium secondary battery in which this positive electrode active material precursor for the lithium secondary battery is used.

[Brief Description of Drawings]

FIG. 1 is a schematic configuration view showing an example of a lithium secondary battery.

FIG. 2 is a schematic configuration view showing the example of the lithium secondary battery.

FIG. 3 is a schematic view showing a laminate that an all-solid-state lithium secondary battery of the present embodiment includes.

FIG. 4 is a schematic view showing an entire configuration of the all-solid-state lithium secondary battery of the present embodiment.

[Description of Embodiments]

Hereinafter, a positive electrode active material precursor for a lithium secondary battery, a method for producing a positive electrode active material precursor for a lithium secondary battery, and a method for producing a positive electrode active material for a lithium secondary battery in which this positive electrode active material precursor for the lithium secondary battery is used in an aspect of the present invention will be described. In a plurality of embodiments to be described below, preferable examples or conditions may be shared.

In the present specification, a positive electrode (cathode) active material for a lithium secondary battery will be referred to as "CAM" below.

"Ni" refers not to a nickel metal but to a nickel atom, and "Co", "Mn", "Li", and the like also, similarly, each refer to a cobalt atom, a manganese atom, a lithium atom, or the like.

In a case where a numerical range is expressed as, for example, "1 to 10 $\mu$m" or "1 to 10 $\mu$m", this means a range from 1 $\mu$m to 10 $\mu$m and means a numerical range including 1 $\mu$m, which is the lower limit value, and 10 $\mu$m, which is the upper limit value.

"Primary particle" means a particle in which, apparently, no grain boundary is present at the time of observing the particle in a visual field of 5000 times or more and 20000 times or less using a scanning electron microscope or the like.

"Secondary particle" is a particle in which primary particles aggregate. That is, a secondary particle is an aggregate of primary particles.

The "BET specific surface area" is a value that is measured by the Brunauer, Emmet, and Teller (BET) method. Nitrogen gas is used as the adsorbed gas in the measurement of the BET specific surface area. For example, the BET specific surface area (unit: $m^2/g$) can be measured using a BET specific surface area meter (for example, Macsorb (registered trademark) manufactured by Mountech Co., Ltd.) after drying 1 g of the powder of a positive electrode active material precursor for a lithium secondary battery in a nitrogen atmosphere at 105°C for 30 minutes.

"Cumulative volume particle size" is measured by the laser diffraction scattering method. Specifically, 0.1 g of the powder of a positive electrode active material precursor for a lithium secondary battery or metal composite hydroxide is injected into 50 ml of a 0.2 mass% sodium hexametaphosphate aqueous solution to obtain a dispersion liquid in which the powder is dispersed. Next, the particle size distribution of the obtained dispersion liquid is measured using a laser diffraction scattering particle size distribution measuring device (for example, MASTERSIZER 2000 manufactured by Malvern Panalytical Ltd.) to obtain a volume-based cumulative particle size distribution curve.

In the obtained cumulative particle size distribution curve, the value of a particle size at 50% cumulation from the fine particle side is the 50% cumulative volume particle size $D_{50}$ ($\mu$m) (hereinafter, referred to as "$D_{50}$" in some cases).

"Discharge rate characteristics" refer to the rate of the discharge capacity at 5CA in the case of defining the discharge capacity at 1CA as 100%. As this rate increases, batteries exhibit a higher output, which is preferable in terms of the battery performance. In the present specification, a value obtained by carrying out a discharge rate test under the following conditions after initial charging and discharging on a lithium secondary battery produced by a method described in <Production of lithium secondary battery (coin-type half cell)> to be described below is used as an index of the discharge rate characteristics. As the initial charging and discharging, constant current constant voltage charging and constant current discharging are carried out at a test temperature of 25°C at a current of 0.2CA for both the charging and the discharging.

(Discharge rate test)

Test temperature: 25°C
Maximum charging voltage: 4.3 V, charging current: 1CA, constant current constant voltage charging
Minimum discharging voltage: 2.5 V, discharging current: 1CA or 5CA, constant current discharging

A 5CA/1CA discharge capacity ratio was obtained using the discharge capacity at the time of constant current discharging the lithium secondary battery at 1CA and the discharge capacity at the time of constant current discharging the lithium secondary battery at 5CA from the following formula and used as an index for the discharge rate characteristics.

(5CA/1CA discharge capacity ratio)

5CA/1CA discharge capacity ratio (%)

$$= \text{discharge capacity at 5CA/discharge capacity at 1CA} \times 100$$

<Positive electrode active material precursor for lithium secondary battery>

A positive electrode active material precursor for a lithium secondary battery of the present embodiment contains at least Ni, $S/D_{50}$ that is the ratio of the BET specific surface area S to $D_{50}$ is $2 \times 10^6$ to $20 \times 10^6$ m/g, and, in powder X-ray diffraction measurement using a CuK$\alpha$ ray, A/B that is the ratio of an integrated intensity A of a diffraction peak within a range of $2\Theta = 37.5 \pm 1°$ to an integrated intensity B of a diffraction peak within a range of $2\Theta = 62.8 \pm 1°$ is more than 0.80 and 1.33 or less. Hereinafter, the positive electrode active material precursor for the lithium secondary battery will be referred to as "precursor" in some cases.

In the present specification, "precursor" is a substance that is mixed with a lithium compound to be described below in order to produce CAM.

In one aspect of the present invention, the precursor is composed of primary particles and secondary particles that are each an aggregate of primary particles.

In one aspect of the present invention, the precursor is a powder.

In the precursor of the present embodiment, $S/D_{50}$ is $2 \times 10^6$ to $20 \times 10^6$ m/g, preferably $2.0 \times 10^6$ to $20 \times 10^6$ m/g, more preferably $2.8 \times 10^6$ to $11 \times 10^6$ m/g, still more preferably $3.0 \times 10^6$ to $10 \times 10^6$ m/g, and particularly preferably $3.0 \times 10^6$ m/g or more and less than $9 \times 10^6$ m/g. When the $S/D_{50}$ is $2 \times 10^6$ m/g or more, it can be said that the precursor is not excessively crystallized. When the $S/D_{50}$ is $20 \times 10^6$ m/g or less, the primary particles that are contained in the precursor aggregate at an appropriate density.

When CAM is produced using a precursor having $S/D_{50}$ of $2 \times 10^6$ to $20 \times 10^6$ m/g, CAM having a large area that is involved in the desorption and insertion of lithium ions and having high discharge rate characteristics for lithium secondary batteries can be obtained.

The BET specific surface area of the precursor is preferably 6 to 45 $m^2/g$, more preferably 8 to 43 $m^2/g$, and still more preferably 10 to 40 $m^2/g$. When the BET specific surface area of the precursor is 6 to 45 $m^2/g$, the primary particles that are contained in the precursor aggregate at an appropriate density. Therefore, when CAM is produced using such a precursor, CAM having high discharge rate characteristics for lithium secondary batteries can be obtained.

$D_{50}$ of the precursor is preferably 2 to 10 $\mu$m, more preferably 2.5 to 8 $\mu$m, and still more preferably 3.0 to 6 $\mu$m. When $D_{50}$ of the precursor is 2 to 10 $\mu$m, the reactivity with the lithium compound in a subsequent calcining step is enhanced, and CAM in which lithium ions are uniformly distributed among particles can be obtained. This makes it possible for the precursor to contribute to improvement in the initial coulomb efficiency and discharge rate characteristics of lithium secondary batteries.

A/B of the precursor is preferably 0.90 to 1.30 and more preferably 1.0 to 1.25.

The powder X-ray diffraction measurement of the precursor can be carried out using an X-ray diffractometer (Ultima IV manufactured by Rigaku Corporation). For example, the powder of the precursor is loaded into a dedicated substrate, and the measurement is carried out using a Cu-K$\alpha$ radiation source under conditions of a diffraction angle of $2\theta = 10°$ to $90°$, a sampling width of $0.02°$, and a scan speed of 4 °/min, thereby obtaining a powder X-ray diffraction pattern. The integrated intensity A within a range of $2\theta = 37.5 \pm 1°$ and the integrated intensity B of a diffraction peak within a range of $2\theta = 62.8 \pm 1°$ are obtained from this powder X-ray diffraction pattern using integrated powder X-ray analysis software JADE, and A/B, which is the ratio of integrated intensity A to integrated intensity B, is calculated.

The peak present within the range of a diffraction angle $2\theta = 37.5 \pm 1°$ is a peak that, in the case of a precursor that belongs to a space group Fm-3m to be described below, corresponds to a (111) plane of a unit lattice, which is the smallest unit in the crystal structure.

The peak present within the range of a diffraction angle $2\theta = 62.8 \pm 1°$ is a peak that, in the case of a precursor that belongs to a space group Fm-3m to be described below, corresponds to a (220) plane of a unit lattice, which is the smallest unit in the crystal structure.

A/B indicates the degree of oxidation of the precursor. A substance from which a peak corresponding to the integrated intensity A cannot be observed indicates that the substance is in a non-oxidized state, for example, a metal composite hydroxide or the like. When A/B is 0.80 or less, the precursor is not in a sufficiently oxidized state and is unlikely to contribute to improvement in the discharge rate characteristics of lithium secondary batteries. When A/B is more than 0.80 and 1. 33 or less, the precursor is in a sufficiently oxidized state and is likely to contribute to improvement in the discharge rate characteristics of lithium secondary batteries. When A/B is more than 1.33, the precursor has been sufficiently oxidized, but CAM is likely to have a crystal structure that is anisotropic in a (220) plane direction and is unlikely to contribute to improvement in the discharge rate characteristics of lithium secondary batteries. However, the precursor may not be completely oxidized and may contain, for example, a metal composite hydroxide as long as A/B is more than 0.80 and 1.33 or less.

When $S/D_{50}$ of the precursor is $2 \times 10^6$ to $20 \times 10^6$ m/g and the A/B is more than 0.80 and 1.33 or less, the area of CAM produced using this precursor that is involved in the desorption and insertion of lithium ions becomes large. Therefore, even in a case where a lithium secondary battery is charged and discharged at a high rate, it is possible to reduce resistance in association with the migration of lithium ions at the time of the desorption and insertion of the lithium ions on the CAM particle surfaces. This makes it possible for the precursor to contribute to improvement in the discharge rate characteristics of lithium secondary batteries.

In the precursor, in the powder X-ray diffraction measurement using a CuK$\alpha$ ray, C/D that is a ratio of a half-width value C of a diffraction peak within a range of $2\theta = 43.5 \pm 1°$ to a half-width value D of a diffraction peak within a range of $2\theta = 62.8 \pm 1°$ is preferably 0.80 to 1.05 and more preferably 0.81 to 1.03. When C/D is 0.80 to 1.05, the precursor is in a sufficiently oxidized state and becomes highly isotropic crystallites. In CAM produced using such a precursor, crystal planes that are involved in the desorption and insertion of lithium ions are uniformly distributed throughout all crystallites, and thus CAM having high discharge rate characteristics for lithium secondary batteries can be obtained.

C/D can be calculated as described below.

After the powder X-ray diffraction pattern of the precursor is obtained by the above-described method, the half-width value C of a diffraction peak within a range of diffraction peaks within a range of $2\theta = 43.5 \pm 1°$ and the half-width value D of a diffraction peak within a range of $2\theta = 62.8 \pm 1°$ are calculated from the powder X-ray diffraction pattern using the integrated powder X-ray analysis software JADE. The ratio C/D is calculated from the obtained values of the half-width value C and the half-width value D.

The precursor preferably contains Ni and one or more elements selected from the group consisting of Co, Mn, and M1 in a mole ratio represented by the following formula (I). M1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.

$$Ni:Co:Mn:M1 = (1 - y - z - w):y:z:w \ldots \qquad (I)$$

The formula (I) satisfies $0 \le y \le 0.4$, $0 \le z \le 0.4$, $0 \le w \le 0.1$, and $0 < y + z + w$.

From the viewpoint of obtaining a lithium secondary battery having a low battery internal resistance, y in the formula (I) is 0 or more, preferably more than 0, more preferably 0.005 or more, and still more preferably 0.05 or more. y in the formula (I) is 0.4 or less, preferably 0.35 or less, more preferably 0.33 or less, and still more preferably 0.30 or less.

The upper limit value and lower limit value of y can be randomly combined together. For example, y is 0 to 0.4, preferably more than 0 and 0.35 or less, more preferably 0.005 to 0.33, and still more preferably 0.05 to 0.30.

From the viewpoint of obtaining a lithium secondary battery having a high cycle retention rate, z in the formula (1) is 0 or more, preferably 0.01 or more, more preferably 0.02 or more, and still more preferably 0.1 or more. In addition, z in the formula (I) is 0.4 or less, preferably 0.39 or less, more preferably 0.38 or less, and still more preferably 0.35 or less.

The upper limit value and lower limit value of z can be randomly combined together. For example, z is 0 to 0.4, preferably 0.01 to 0.39, more preferably 0.02 to 0.38, and still more preferably 0.1 to 0.35.

From the viewpoint of obtaining a lithium secondary battery having a low battery internal resistance, w in the composition formula (I) is 0 or more, preferably more than 0, more preferably 0.0005 or more, and still more preferably 0.001 or more. In addition, from the viewpoint of obtaining a lithium secondary battery having a large discharge capacity at a high current rate, w in the composition formula (I) is 0.1 or less, preferably 0.09 or less, more preferably 0.08 or less, and still more preferably 0.07 or less.

The upper limit value and lower limit value of w can be randomly combined together. For example, w is 0 to 0.01, preferably more than 0 and 0.09 or less, more preferably 0.0005 to 0.08, and still more preferably 0.001 to 0.07.

From the viewpoint of improving cycle characteristics, y + z + w is more than 0, preferably 0.01 or more, and more preferably 0.02 or more. From the viewpoint of obtaining a lithium secondary battery having high thermal stability, y + z + w is 0.9 or less, preferably 0.75 or less, and more preferably 0.7 or less.

The upper limit value and lower limit value of y + z + w can be randomly combined together. y + z + w is preferably0 to 0.9, more preferably 0.01 to 0.5, and still more preferably 0.05 to 0.3.

From the viewpoint of obtaining a lithium secondary battery having a high cycle retention rate, M1 is preferably one or more elements selected from the group consisting of Ti, Mg, Al, W, B, Zr, and Nb and more preferably one or more elements selected from the group consisting of Al, W, B, Zr, and Nb.

The precursor of the present embodiment preferably contains a metal composite oxide represented by the following formula (II).

$$Ni_{(1-y-z-w)}Co_yMn_zM1_wO_2 \ldots \qquad (II)$$

The numerical ranges and preferable ranges of y, z, and w in the formula (II) are the same as those of y, z, and w in the formula (I).

The composition of the precursor can be analyzed, for example, using an inductively coupled plasma emission spectrometer (for example, SPS3000 manufactured by Seiko Instruments Inc.) after the precursor powder is dissolved in hydrochloric acid.

In the present embodiment, the crystal structure of the precursor is more preferably a cubic crystal structure.

The cubic crystal structure belongs to any one space group selected from the group consisting of Fm-3m, Fd-3m, Fm3, Fm-3c, Fd-3c, Fd3, F-43m, F23, Pa3, Pm-3m, Pn-3n, P-43c, P- 43m, P-43n, P23, P2i3, la-3d, I2$_1$3, Pm3, Pn3, P432, P4$_1$32, P4$_2$32, I23, I432, Ia3, Im3, I-43d, I-43m, and Im-3m.

Among these, the crystal structure is particularly preferably a cubic crystal structure belonging to the space group Fm-3m or a cubic crystal structure belonging to Fd-3m in order to obtain a lithium secondary battery having a high discharge capacity.

<Method for producing precursor>

A method for producing a precursor of the present embodiment includes heating a metal composite hydroxide containing at least Ni and having a tap density of 0.60 to 2.0 $g/cm^3$ at 400 to 700°C.

Hereinafter, the method for producing a precursor will be described. As an example, a production method in a case where the precursor is containing Ni, Co, and Mn will be described.

As a raw material powder of the precursor, a metal composite hydroxide containing Ni, Co, and Mn is prepared. Usually, the metal composite hydroxide can be produced by a well-known batch-type co-precipitation method or continuous co-precipitation method.

Specifically, a nickel salt solution, a cobalt salt solution, a manganese salt solution, and a complexing agent are reacted by the continuous co-precipitation method described in JP-A-2002-201028, thereby producing a metal composite hydroxide represented by $Ni_{(1-y-z)}Co_yMn_z(OH)_2$ (in the example of this production method, since it is assumed that Ni, Co, and Mn are contained, in the formula, $0 < y \leq 0.4$ and $0 < z \leq 0.4$ are satisfied).

A nickel salt that is a solute of the nickel salt solution is not particularly limited, and, for example, at least one of nickel sulfate, nickel nitrate, nickel chloride, and nickel acetate can be used.

As a cobalt salt that is a solute of the cobalt salt solution, for example, at least one of cobalt sulfate, cobalt nitrate, cobalt chloride, and cobalt acetate can be used.

As a manganese salt that is a solute of the manganese salt solution, for example, at least one of manganese sulfate, manganese nitrate, manganese chloride, and manganese acetate can be used.

The above-described metal salts are used in ratios corresponding to the composition ratio of $Ni_{(1-y-z)}Co_yMn_z(OH)_2$. That is, the amount of each metal salt is specified so that the mole ratio of Ni, Co, and Mn in a mixed solution containing the above-described metal salts corresponds to (1-y-z):y:z in the formula (I) of the precursor. In addition, as the solvent, water is used.

The complexing agent is capable of forming a complex with a nickel ion, a cobalt ion, and a manganese ion in an aqueous solution, and examples thereof include ammonium ion donors (ammonium hydroxide, ammonium sulfate, ammonium chloride, ammonium carbonate, ammonium fluoride, and the like), hydrazine, ethylenediaminetetraacetic acid, nitrilotriacetic acid, uracildiacetic acid, and glycine.

In the production step of the metal composite hydroxide, the complexing agent may or may not be used. In a case where the complexing agent is used, regarding the amount of the complexing agent that is contained in the liquid mixture containing the nickel salt solution, a random metal salt solution, and the complexing agent, for example, the mole ratio of the complexing agent to the sum of the mole numbers of the metal salts (a nickel salt and a random metal salt) is more than 0 and 2.0 or less. In the present embodiment, regarding the amount of the complexing agent that is contained in the liquid mixture containing the nickel salt solution, the cobalt salt solution, the manganese salt solution, and the complexing agent, for example, the mole ratio of the complexing agent to the sum of the mole numbers of the metal salts (a nickel salt, a cobalt salt and a manganese salt) is more than 0 and 2.0 or less.

In the co-precipitation method, in order to adjust the pH value of the liquid mixture containing the nickel salt solution, a random metal salt solution, and the complexing agent, an alkali metal hydroxide is added to the liquid mixture before the pH of the liquid mixture turns from alkaline into neutral. The alkali metal hydroxide is, for example, sodium hydroxide or potassium hydroxide.

The value of pH in the present specification is defined as a value measured when the temperature of the liquid mixture is 40°C. The pH of the liquid mixture is measured when the temperature of the liquid mixture sampled from a reaction vessel reaches 40°C. In a case where the sampled liquid mixture is lower than 40°C, the liquid mixture is heated up to 40°C and the pH is measured. In a case where the sampled liquid mixture exceeds 40°C, the pH of the liquid mixture cooled to 40°C is measured.

When the complexing agent in addition to the nickel salt solution, the cobalt salt solution, and the manganese salt solution is continuously supplied to the reaction vessel, Ni, Co, and Mn react with one another, and $Ni_{(1-y-z)}Co_yMn_z(OH)_2$ is generated.

At the time of the reaction, the temperature of the reaction vessel is controlled in a range of, for example, 20°C or higher and 80°C or lower and preferably 30°C or higher and 70°C or lower.

In addition, at the time of the reaction, the pH value in the reaction vessel is controlled, for example, within a range of pH 9 to 13 and preferably pH 10.5 to 12.4. When the pH in the reaction vessel is set to be high, there is a tendency that the tap density of a metal composite hydroxide to be obtained becomes high.

The substances in the reaction vessel are stirred and mixed together. The stirring speed is preferably 100 to 5000 rpm and more preferably 500 to 2000 rpm. When the stirring speed is set to be slow, there is a tendency that the tap density of a metal composite hydroxide to be obtained becomes high.

A reaction precipitate formed in the reaction vessel is neutralized under stirring. The time for the neutralization of the reaction precipitate is preferably 1 to 20 hours and more preferably 5 to 15 hours. When the neutralization time is set to be long, there is a tendency that the tap density of a metal composite hydroxide to be obtained becomes high.

Ammonium sulfate crystals may be injected when the reaction begins. In a case where ammonium sulfate crystals are injected, the amount of the ammonium sulfate crystals injected is preferably more than 0 g and 20 g or less, preferably more than 0 g and 1 g or less, and preferably more than 0 g and 0.5 g or less per 1 L of the volume of the reaction vessel. When ammonium sulfate crystals are injected, there is a tendency that the tap density of a metal composite hydroxide to be obtained becomes low.

As described above, when the pH, stirring speed, and neutralization time in the reaction vessel and the amount of the ammonium sulfate crystals added are adjusted as appropriate, it is possible to control the tap density or $D_{50}$ of the metal composite hydroxide to the range of the present embodiment.

As the reaction vessel that is used in the continuous co-precipitation method, it is possible to use a reaction vessel in which the formed reaction precipitate is caused to overflow for separation.

A variety of gases, for example, an inert gas such as nitrogen, argon, or carbon dioxide, an oxidizing gas such as an air or oxygen, or a gas mixture thereof may be supplied into the reaction vessel.

As the reaction vessel that is used in a batch-type co-precipitation method, a reaction vessel not equipped with an overflow pipe can be used. Alternatively, it is also possible to use a device equipped with a condensation tank connected to an overflow pipe and having a mechanism in which a reaction precipitate that has overflowed is condensed in a condensation layer and again circulated to a reaction vessel.

After the above-described reaction, the neutralized reaction precipitate is isolated. For isolation, for example, a method in which a slurry containing the reaction precipitate (co-precipitate slurry) is dehydrated by centrifugation, suction filtration, or the like is used.

The neutralized reaction precipitate is washed, dehydrated, dried, and sieved, and a metal composite hydroxide containing Ni, Co and Mn is obtained.

The reaction precipitate is preferably washed with water or an alkaline washing liquid. In the present embodiment, the co-precipitate is preferably washed with an alkaline washing liquid and more preferably washed with a sodium hydroxide solution. In addition, the precursor hydroxide may be washed using a washing liquid containing a sulfur element. As the washing liquid containing a sulfur element, a sulfate aqueous solution of Ka or Na or the like is an exemplary example.

The tap density of the metal composite hydroxide that is produced as described above is preferably 0.60 $g/cm^3$ or more, more preferably 0.80 $g/cm^3$ or more, and still more preferably 0.90 $g/cm^3$ or more. The tap density of the metal composite hydroxide is preferably 2.0 $g/cm^3$ or less, more preferably 1.9 $g/cm^3$ or less, and still more preferably 1.8 $g/cm^3$ or less. The upper limit value and lower limit value of the tap density of the metal composite hydroxide can be randomly combined together. For example, the tap density of the metal composite hydroxide is preferably 0.60 to 2.0 $g/cm^3$, more preferably 0.80 to 1.9 $g/cm^3$, and still more preferably 0.90 to 1.8 $g/cm^3$.

Here, the tap density corresponds to the tap bulk density in JIS R 1628-1997.

$D_{50}$ of the metal composite hydroxide is preferably 2 $\mu m$ or more, more preferably 2.0 $\mu m$ or more, and still more preferably 2.5 $\mu m$ or more. $D_{50}$ of the metal composite hydroxide is preferably less than 10 $\mu m$, more preferably 8 $\mu m$ or less, and still more preferably 6 $\mu m$ or less. The upper limit value and lower limit value of $D_{50}$ of the metal composite hydroxide can be randomly combined together. For example, $D_{50}$ of the metal composite hydroxide is preferably 2 $\mu m$ or more and less than 10 $\mu m$, more preferably 2.0 to 8 $\mu m$, and still more preferably 2.5 to 6 $\mu m$.

When a metal composite hydroxide having a tap density of 0.6 to 2.0 $g/cm^3$ and preferably having $D_{50}$ of 2 $\mu m$ or more and less than 10 $\mu m$ is used, it is possible to control the $S/D_{50}$, A/B, and C/D of the precursor to be produced to be within the preferable ranges of the present embodiment.

In the above description, the metal composite hydroxide containing Ni, Co, and Mn has been mentioned as an example, but the metal composite hydroxide may contain at least Ni. The metal composite hydroxide preferably contains Ni and one or more elements selected from the group consisting of Co, Mn, and M1 in a mole ratio represented by the formula (1). M1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.

In addition, the metal composite hydroxide of the present embodiment is preferably represented by the following formula (III).

$$Ni_{(1-y-z-w)}Co_yMn_zM1_w(OH)_2 \ldots \qquad (III)$$

The numerical ranges and preferable ranges of y, z, and w in the formula (111) are the same as those of y, z, and w in the formula (I).

Next, the metal composite hydroxide is heated to produce a precursor. Specifically, the metal composite hydroxide is heated at 400°C or higher and 700°C or lower. If necessary, a plurality of heating steps may be carried out.

The heating temperature in the present specification means the set temperature of a heating device. In the case of having a plurality of heating steps, the heating temperature means the temperature when the metal composite hydroxide is heated at the highest holding temperature among individual heating steps.

The heating temperature is preferably 400°C or higher and 700°C or lower and more preferably 450°C or higher and 680°C or lower. When the heating temperature is lower than 400°C, there is a concern that the metal composite hydroxide may not be sufficiently oxidized. When the heating temperature exceeds 700°C, there is a concern that the metal composite hydroxide may be excessively oxidized and the BET specific surface area of the precursor may become too small.

The time during which the metal composite hydroxide is held at the heating temperature is, for example, 0.1 to 20 hours, preferably 0.5 to 10 hours, and more preferably 1 to 8 hours. The temperature rising rate up to the heating temperature is usually 50 to 400 °C/hour, and the temperature decrease rate from the heating temperature to room temperature is usually 10 to 400 °C/hour or slower. In addition, as the heating atmosphere, it is possible to use the atmosphere, oxygen, nitrogen, argon or a gas mixture thereof.

The use of a precursor obtained by adjusting the heating temperature and the holding time to be within the above-described ranges makes it possible to control $S/D_{50}$ and A/B of the precursor to be produced to be within the preferable ranges of the present embodiment.

In addition, the inside of the heating device may have an appropriate oxygen-containing atmosphere. The oxidizing atmosphere may be an oxygen-containing atmosphere formed by mixing an oxidizing gas into an inert gas or an oxidizing agent may be present in an inert gas atmosphere. When the inside of the heating device is an appropriate oxidizing atmosphere, a transition metal that is contained in the liquid mixture is appropriately oxidized, which makes it easy to control the form of the precursor.

As oxygen or the oxidizing agent in the oxidizing atmosphere, a sufficient number of oxygen atoms need to be present in order to oxidize the transition metal.

In a case where the oxidizing atmosphere is an oxygen-containing atmosphere, the atmosphere in the heating device can be controlled by a method such as the aeration of an oxidizing gas into the reaction vessel or the bubbling of an oxidizing gas in the liquid mixture.

As the oxidizing agent, it is possible to use a peroxide such as hydrogen peroxide, a peroxide salt such as permanganate, perchloric acid, hypochlorous acid, nitric acid, halogen, ozone, or the like.

<Method for producing positive electrode active material for lithium secondary battery>

CAM is produced using the above-described precursor. That is, a method for producing CAM of the present embodiment includes mixing the precursor and a lithium compound to obtain a mixture and calcining the mixture.

As described above, the use of a precursor having $S/D_{50}$ of $2 \times 10^6$ to $20 \times 10^6$ m/g and A/B of more than 0.80 and 1.33 or less makes it possible to produce CAM having favorable discharge rate characteristics.

First, the precursor is dried and then mixed with the lithium compound. After the drying of the precursor, classification may be appropriately carried out.

As the lithium compound that is used in the present embodiment, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

In addition, in a case where lithium hydroxide contains lithium carbonate, the content of lithium carbonate in lithium hydroxide is preferably 5 mass% or less.

The lithium compound and the precursor are mixed in consideration of the composition ratio of a final target product. Specifically, the lithium compound and the precursor are mixed at ratios corresponding to the composition ratio of the composition formula (IV). The composition formula (IV) satisfies $-0.1 \leq x \leq 0.2$, and the numerical ranges and preferable ranges of y, z, and w in the composition formula (IV) are the same as y, z, and w in the composition formula (I). More specifically, the metal atoms that are contained in the precursor and a lithium salt are mixed so that the mole ratio of Li to the total of the metal atoms becomes more than 1.0. The mole ratio of Li to the total of the metal atoms is preferably 1.05 or more and more preferably 1.10 or more.

$$Li[Li_x(Ni_{(1-y-z-w)}Co_yMn_zM1_w)_{1-x}]O_2 \ ... \qquad (IV)$$

Subsequently, the mixture of the precursor and the lithium compound is calcined. In the calcining, a dry air, an oxygen atmosphere, an inert atmosphere, or the like is used depending on a desired composition, and a plurality of calcining steps is carried out as necessary.

The calcining temperature of the precursor and the lithium compound is not particularly limited and is, for example, preferably 600 to 1100°C, more preferably 650 to 900°C, and still more preferably 650 to 875°C. When the calcining temperature is the above-described lower limit value or more, it is possible to obtain CAM having a strong crystal structure. In addition, when the calcining temperature is the above-described upper limit value or lower, it is possible to reduce the volatilization of lithium ions on the surfaces of secondary particles.

In the present specification, the calcining temperature means the temperature of the atmosphere in a calcining furnace and means the highest temperature of the holding temperatures in the calcining step (hereinafter, referred to as the highest holding temperature in some cases). In the case of the calcining step having a plurality of calcining steps, the calcining temperature means a temperature at the time of calcining the precursor and the liquid compound at the highest holding temperature in each of the calcining steps.

The calcining time is preferably 3 to 50 hours. When the calcining time exceeds 50 hours, there is a tendency that the battery performance substantially deteriorates due to the volatilization of lithium. When the calcining time is shorter than 3 hours, the development of crystals is poor, and there is a tendency that the battery performance becomes poor. It is also effective to carry out preliminary calcining before the above-described calcining. The temperature of the preliminary calcining is within a range of 300 to 850°C, and the preliminary calcining is preferably carried out for 1 to 10 hours.

In the present embodiment, the temperature rising rate in the heating step in which the highest holding temperature is reached is preferably 180 °C/hour or faster, more preferably 200 °C/hour or faster, and particularly preferably 250 °C/hour or faster.

The temperature rising rate in the heating step in which the highest holding temperature is reached is calculated from the time taken while the temperature begins to be raised and then reaches a holding temperature to be described below in the calcining device.

The calcining step preferably has a plurality of calcining stages that is carried out at different calcining temperatures. For example, the calcining step preferably has a first calcining stage and a second calcining stage of calcining the precursor and the lithium compound at a higher temperature than in the first calcining stage. Furthermore, the calcining step may have a calcining stage that is carried out at a different calcining temperature for a different calcining time.

In addition, as another aspect of the present embodiment, the mixture of the lithium compound and the precursor may be calcined in the presence of an inert melting agent. The method for producing CAM using an inert melting agent is also referred to as a flux method.

Calcining of the mixture in the presence of an inert melting agent makes it possible to accelerate the reaction of the mixture. The inert melting agent may remain in CAM after calcining or may be removed by washing CAM with a washing liquid or the like. In the present embodiment, the calcined CAM is preferably washed with pure water, the alkaline washing liquid, or the like.

The calcining temperature may be appropriately adjusted depending on the kind of a transition metal element used and the kinds and amounts of a precipitant and the inert melting agent.

As the calcining atmosphere, the atmosphere, oxygen, nitrogen, argon, a gas mixture thereof, or the like is used depending on a desired composition, and a plurality of calcining steps is carried out if necessary.

In the present embodiment, the calcining temperature may be set in consideration of the melting point of the inert melting agent, which will be described below and is preferably set in a range of [melting point of inert melting agent - 200°C] or higher and [melting point of inert melting agent + 200°C] or lower.

As the calcining temperature, specifically, a range of 200 to 1150°C is an exemplary example, and the calcining temperature is preferably 300 to 1000°C and more preferably 500 to 875°C.

The holding time in the calcining may be appropriately adjusted depending on the kind of a transition metal element used and the kinds and amounts of a precipitant and the inert melting agent.

Specifically, as the time during which the mixture is held at the calcining temperature, 0.1 to 20 hours is an exemplary example, and 0.5 to 10 hours is preferable. The temperature rising rate up to the calcining temperature is, for example, 50 to 400 °C/hour, and the temperature decrease rate from the calcining temperature to room temperature is, for example, 10 to 400 °C/hour. In addition, as the atmosphere for the calcining, it is possible to use the atmosphere, oxygen, nitrogen, argon or a gas mixture thereof.

The inert melting agent that can be used in the present embodiment is not particularly limited as long as the inert melting agent does not easily react with the mixture during the calcining. In the present embodiment, at least one selected from the group consisting of a fluoride of one or more elements selected from the group consisting of Na, K, Rb, Cs, Ca, Mg, Sr, and Ba (hereinafter, referred to as "M"), a chloride of M, a carbonate of M, a sulfate of M, a nitrate of M, a phosphate of M, a hydroxide of M, a molybdate of M, and a tungstate of M are exemplary examples.

As the fluoride of M, $NaF$ (melting point: 993°C), $KF$ (melting point: 858°C), $RbF$ (melting point: 795°C), $CsF$ (melting point: 682°C), $CaF_2$ (melting point: 1402°C), $MgF_2$ (melting point: 1263°C), $SrF_2$ (melting point: 1473°C), and $BaF_2$ (melting point: 1355°C) can be exemplary examples.

As the chloride of M, $NaCl$ (melting point: 801°C), $KCl$ (melting point: 770°C), $RbCl$ (melting point: 718°C), $CsCl$ (melting point: 645°C), $CaCl_2$ (melting point: 782°C), $MgCl_2$ (melting point: 714°C), $SrCl_2$ (melting point: 857°C), and $BaCl_2$ (melting point: 963°C) can be exemplary examples.

As the carbonate of M, $Na_2CO_3$ (melting point: 854°C), $K_2CO_3$ (melting point: 899°C), $Rb_2CO_3$ (melting point:

837°C), Cs$_2$CO$_3$ (melting point: 793°C), CaCO$_3$ (melting point: 825°C), MgCO$_3$ (melting point: 990°C), SrCO$_3$ (melting point: 1497°C), and BaCO$_3$ (melting point: 1380°C) can be exemplary examples.

As the sulfate of M, Na$_2$SO$_4$ (melting point: 884°C), K$_2$SO$_4$ (melting point: 1069°C), Rb$_2$SO$_4$ (melting point: 1066°C), Cs$_2$SO$_4$ (melting point: 1005°C), CaSO$_4$ (melting point: 1460°C), MgSO$_4$ (melting point: 1137°C), SrSO$_4$ (melting point: 1605°C), and BaSO$_4$ (melting point: 1580°C) can b exemplary examples.

Examples of the nitrate of M, NaNO$_3$ (melting point: 310°C), KNO$_3$ (melting point: 337°C), RbNO$_3$ (melting point: 316°C), CsNO$_3$ (melting point: 417°C), Ca(NO$_3$)$_2$ (melting point: 561°C), Mg(NO$_3$)$_2$, Sr(NO$_3$)$_2$ (melting point: 645°C), and Ba(NO$_3$)$_2$ (melting point: 596°C) can be exemplary examples.

As the phosphate of M, Na$_3$PO$_4$, K$_3$PO$_4$ (melting point: 1340°C), Rb$_3$PO$_4$, Cs$_3$PO$_4$, Ca$_3$(PO$_4$)$_2$, Mg$_3$(PO$_4$)$_2$, (melting point: 1184°C), Sr$_3$(PO$_4$)$_2$ (melting point: 1727°C), and Ba$_3$(PO$_4$)$_2$ (melting point: 1767°C) can be exemplary examples.

As the hydroxide of M, NaOH (melting point: 318°C), KOH (melting point: 360°C), RbOH (melting point: 301°C), CsOH (melting point: 272°C), Ca(OH)$_2$ (melting point: 408°C), Mg(OH)$_2$ (melting point: 350°C), Sr(OH)$_2$ (melting point: 375°C), and Ba(OH)$_2$ (melting point: 853°C) can be exemplary examples.

As the molybdate of M, Na$_2$MoO$_4$ (melting point: 698°C), K$_2$MoO$_4$ (melting point: 919°C), Rb$_2$MoO$_4$ (melting point: 958°C), Cs$_2$MoO$_4$ (melting point: 956°C), CaMoO$_4$ (melting point: 1520°C), MgMoO$_4$ (melting point: 1060°C), SrMoO$_4$ (melting point: 1040°C), and BaMoO$_4$ (melting point: 1460°C) can be exemplary examples.

As the tungstate of M, Na$_2$WO$_4$ (melting point: 687°C), K$_2$WO$_4$, Rb$_2$WO$_4$, Cs$_2$WO$_4$, CaWO$_4$, MgWO$_4$, SrWO$_4$, and BaWO$_4$ can be exemplary examples.

In the present embodiment, it is also possible to use two or more kinds of inert melting agents described above. In the case of using two or more kinds of inert melting agents, there is also a case where the melting point decreases. In addition, among these inert melting agents, as an inert melting agent for obtaining CAM having higher crystallinity, any of the carbonate of M, the sulfate of M, and the chloride of M or a combination thereof is preferable. In addition, M is preferably any one or both of Na and K. That is, among the above-described inert melting agents, a particularly preferable inert melting agent is one or more selected from the group consisting of NaOH, KOH, NaCl, KCl, Na$_2$CO$_3$, K$_2$CO$_3$, Na$_2$SO$_4$, and K$_2$SO$_4$.

In the present embodiment, K$_2$CO$_3$ or K$_2$SO$_4$ is preferable as the inert melting agent.

In the present embodiment, the amount of the inert melting agent used during the calcining may be appropriately adjusted. Regarding the amount of the inert melting agent used during the calcining, the amount of the inert melting agent to the total amount of the lithium compound and the inert melting agent (mole ratio) is preferably 0.010 to 30 mol%, more preferably 0.015 to 20 mol%, and still more preferably 0.020 to 15 mol%.

CAM of the present embodiment can be produced as described above. In addition to the operations, the following operations may be further carried out.

In the present embodiment, the calcined CAM is preferably crushed, for example, for a range of 10 minutes or longer and 2 hours or shorter. In the present embodiment, CAM can be crushed using, for example, a mortar, a pin mill, a masscolloider, or the like.

The inert melting agent remaining on the crushed CAM may be washed. For the washing, pure water or an alkaline washing liquid can be used. For example, aqueous solutions of one or more anhydrides selected from the group consisting of lithium hydroxide, sodium hydroxide, potassium hydroxide, lithium carbonate, sodium carbonate, potassium carbonate, and ammonium carbonate and a hydrate thereof can be exemplary examples. In addition, as an alkali, it is also possible to use ammonia.

The temperature of the washing liquid that is used for the washing is preferably 15°C or lower, more preferably 10°C or lower, and still more preferably 8°C or lower. When the temperature of the washing liquid is controlled within the above-described range to an extent that the washing liquid does not freeze, it is possible to suppress the excessive elution of lithium ions from the crystal structure of CAM into the washing liquid during the washing.

As a method for bringing the washing liquid and CAM into contact with each other in the washing, a method in which CAM is injected into an aqueous solution of each washing liquid and stirred is an exemplary example. In addition, a method in which an aqueous solution of each washing liquid is sprayed to CAM as a shower water may also be used. Furthermore, a method in which CAM is injected into an aqueous solution of the washing liquid and stirred, then, CAM is separated from the aqueous solution of each washing liquid, and then the aqueous solution of each washing liquid is sprayed to the separated CAM as a shower water may also be used.

In the washing, it is preferable to bring the washing liquid and CAM into contact with each other for an appropriate range of time. "Appropriate time" in the washing refers to a time long enough to disperse each particle of CAM while removing the inert melting agent remaining on the surface of CAM. The washing time is preferably adjusted depending on the aggregation state of CAM. The washing time is particularly preferably, for example, in a range of 5 minutes or longer and 1 hour or shorter.

In the present embodiment, after the washing of CAM, it is preferable to further carry out a heat treatment on CAM. The temperature or method for carrying out the heat treatment on LiMO is not particularly limited, but is preferably 300°C or higher, more preferably 350°C or higher, and still more preferably 400°C or higher since it is possible to prevent a decrease in the charge capacity. In addition, while not particularly limited, the temperature is preferably 1000°C or lower and more preferably 950°C or lower since the volatilization of lithium ions can be prevented and CAM having the composition of the present embodiment can be obtained.

The amount of lithium ions volatilized can be controlled by the heat treatment temperature. The upper limit value and lower limit value of the heat treatment temperature can be randomly combined together. For example, the heat treatment temperature is preferably 300 to 1000°C, more preferably 350 to 950°C, and still more preferably 400 to 950°C.

As the atmosphere during the heat treatment, an oxygen atmosphere, an inert atmosphere, a reduced pressure atmosphere, or a vacuum atmosphere is an exemplary example. When the drying after the washing is carried out in the above-described atmosphere, a reaction between CAM and moisture or carbon dioxide in the atmosphere during the heat treatment is suppressed, and CAM containing a few impurities can be obtained.

CAM may be dried by blasting. CAM may be dried in a combination of the drying temperature, the atmosphere during drying, and the blasting conditions described above.

<Lithium secondary battery>

Next, the configuration of a lithium secondary battery that is suitable in a case where CAM that is produced from the precursor of the present embodiment is used will be described.

CAM is preferably composed of CAM that is produced from the precursor of the present embodiment, but may contain other components as long as the effects of the present invention are not impaired. For example, the content fraction of CAM that is produced from the precursor of the present embodiment in the total mass (100 mass%) of CAM is preferably 70 to 99 mass% and more preferably 80 to 98 mass%.

Furthermore, a positive electrode suitable in a case where CAM that is produced from the precursor of the present embodiment is used will be described.

Furthermore, a lithium secondary battery that is suitable for an application of a positive electrode will be described.

An example of the lithium secondary battery that is suitable in a case where CAM that is produced from the precursor of the present embodiment is used has a positive electrode, a negative electrode, a separator interposed between the positive electrode and the negative electrode, and an electrolytic solution disposed between the positive electrode and the negative electrode.

An example of the lithium secondary battery has a positive electrode, a negative electrode, a separator interposed between the positive electrode and the negative electrode, and an electrolytic solution disposed between the positive electrode and the negative electrode.

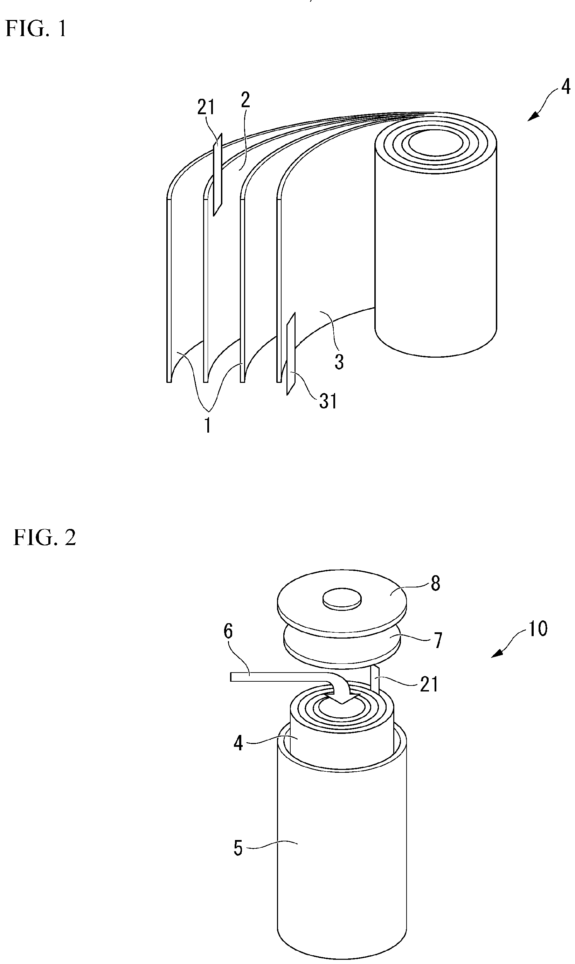

FIG. 1 and FIG. 2 are schematic views showing an example of the lithium secondary battery. A cylindrical lithium secondary battery 10 of the present embodiment is produced as described below.

First, as shown in FIG. 1, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, as shown in FIG. 2, the electrode group 4 and an insulator, not shown, are accommodated in a battery can 5, and then the can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. For example, shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

The positive electrode can be produced by, first, preparing a positive electrode mixture containing CAM, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples.

The fraction of the conductive material in the positive electrode mixture is preferably 5 to 20 parts by mass with respect to 100 parts by mass of CAM.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. When a fluororesin and a polyolefin resin are used as the binder, the fraction of the fluororesin to the entire positive electrode mixture is set to 1 mass% or more and 10 mass% or less, and the fraction of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a strip-shaped member formed of a metal material such as Al, Ni, or stainless steel as a forming material can be used.

As a method for supporting the positive electrode mixture by the positive electrode current collector, a method in which a paste of the positive electrode mixture is prepared using an organic solvent, the paste of the positive electrode mixture to be obtained is applied to and dried on at least one surface side of the positive electrode current collector, and the positive electrode mixture is fixed by pressing is an exemplary example.

As the organic solvent that can be used in a case where the paste of the positive electrode mixture is prepared, N-methyl-2-pyrrolidone (hereinafter, referred to as NMP in some cases) is an exemplary example.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite or artificial graphite, cokes, carbon black, a carbon fiber, and an organic polymer compound-calcined body can be exemplary examples.

As oxides that can be used as the negative electrode active material, oxides of silicon represented by a formula $SiO_x$ (here, x is a positive real number) such as $SiO_2$ and $SiO$; oxides of tin represented by a formula $SnO_x$ (here, x is

a positive real number) such as $SnO_z$ and $SnO$; and metal composite oxides containing lithium and titanium or vanadium such as $Li_4Ti_5O_{12}$ and $LiVO_2$ can be exemplary examples.

In addition, as the metal that can be used as the negative electrode active material, lithium metal, silicon metal, tin metal, and the like can be exemplary examples. As a material that can be used as the negative electrode active material, the materials described in WO 2019/098384A1 or US2020/0274158A1 may be used.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

(Electrolytic solution)

The electrolytic solution in the lithium secondary battery contains an electrolyte and an organic solvent.

As the electrolyte that is contained in the electrolytic solution, lithium salts such as $LiClO_4$ and $LiPF_6$ are exemplary examples, and a mixture of two or more thereof may be used. In addition, the electrolytes described in WO 2019/098384A1 or US2020/0274158A1 may be used.

In addition, as the organic solvent that is contained in the electrolytic solution, for example, carbonates such as propylene carbonate, ethylene carbonate, dimethyl carbonate, diethyl carbonate, and ethyl methyl carbonate can be used. In addition, as the organic solvent that is contained in the electrolytic solution, the organic solvents described in WO2019/098384A1 or US2020/0274158A1 can be used.

As the organic solvent, two or more of these are preferably mixed and used, and a solvent mixture of a cyclic carbonate and a non-cyclic carbonate and a solvent mixture of a cyclic carbonate and ethers are more preferable.

In addition, as the electrolytic solution, it is preferable to use an electrolytic solution containing a lithium salt containing fluorine such as $LiPF_6$ and an organic solvent having a fluorine substituent since the safety of lithium secondary batteries to be obtained is enhanced.

<All-solid-state lithium secondary battery>

Next, a positive electrode for which CAM that is produced from the precursor according to an aspect of the present invention is used as a positive electrode active material for an all-solid-state lithium secondary battery and an all-solid-state lithium secondary battery having this positive electrode will be described while describing the configuration of the all-solid-state lithium secondary battery.

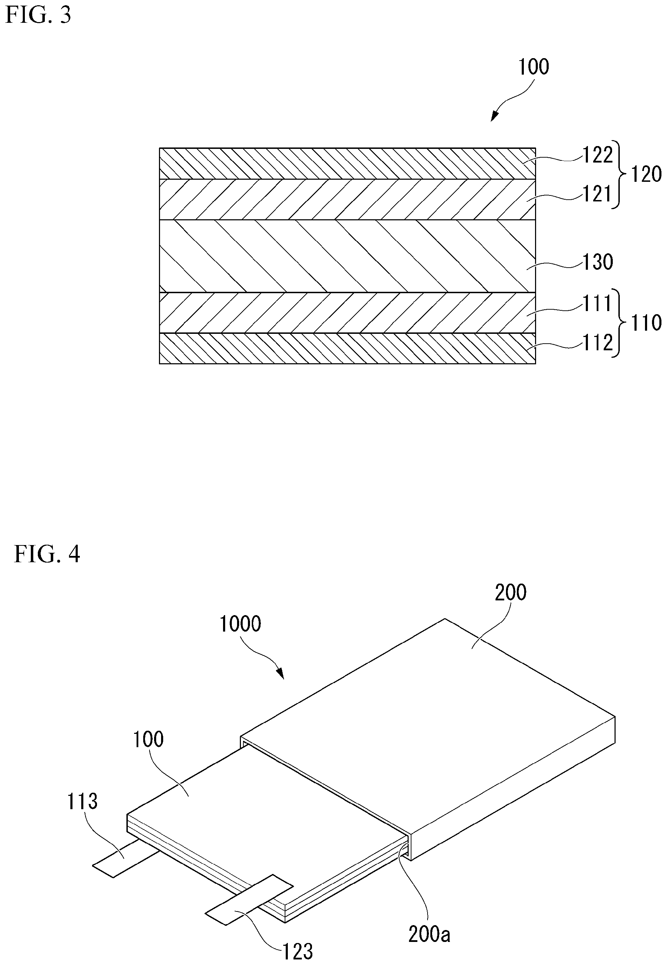

FIG. 3 and FIG. 4 are schematic views showing an example of an all-solid-state lithium secondary battery of the present embodiment. An all-solid-state lithium secondary battery 1000 shown in FIG. 3 and FIG. 4 has a laminate 100 having a positive electrode 110, a negative electrode 120, and a solid electrolyte layer 130 and an exterior body 200 accommodating the laminate 100. In addition, the all-solid-state lithium secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples. A material that configures each member will be described below.

The laminate 100 may have an external terminal 113 that is connected to a positive electrode current collector 112 and an external terminal 123 that is connected to a negative electrode current collector 122. In addition, the all-solid-state lithium secondary battery 1000 may have a separator between the positive electrode 110 and the negative electrode 120.

The all-solid-state lithium secondary battery 1000 further has an insulator, not shown, that insulates the laminate 100 and the exterior body 200 from each other and a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin-type, a button-type, a paper-type (or a sheet-type), a cylindrical shape, a square shape, and a laminate-type (pouch-type) can be exemplary examples.

As an example of the all-solid-state lithium secondary battery 1000, a form in which one laminate 100 is provided is shown in the drawings, but the present embodiment is not limited thereto. The all-solid-state lithium secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 of the present embodiment has a positive electrode active material layer 111 and a positive electrode current collector 112.

The positive electrode active material layer 111 contains CAM, which is one aspect of the present invention described above, and a solid electrolyte. In addition, the positive electrode active material layer 111 may contain a conductive material and a binder.

(Solid electrolyte)

As the solid electrolyte that is contained in the positive electrode active material layer 111 of the present embodiment, a solid electrolyte that has lithium ion conductivity and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

(Oxide-based solid electrolyte)

As the oxide-based solid electrolyte, for example, a perovskite-type oxides, a NASICON-type oxide, a LISICON-type oxide, a garnet-type oxides, and the like are exemplary examples. Specific examples of each oxide include the compounds described in WO 2020/208872A1, US2016/0233510A1, and US2020/0259213A1, and, for example, the following compounds are exemplary examples.

As the garnet-type oxide, Li-La-Zr-based oxides such as $Li_7La_3Zf_2O_{12}$ (also referred to as LLZ) are exemplary examples.

The oxide-based solid electrolyte may be a crystalline material or an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $Li_2S$-$P_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, $Li_{10}GeP_2S_{12}$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes mainly containing $Li_2S$ and $P_2S_5$ and further containing a different raw material. The fraction of $Li_2S$ that is contained in the $Li_2S$-$P_2S_5$-based compound is, for example, 50 to 90 mass% with respect to the entire $Li_2S$-$P_2S_5$-based compound. The fraction of $P_2S_5$ that is contained in the $Li_2S$-$P_2S_5$-based compound is, for example, 10 to 50 mass% with respect to the entire $Li_2S$-$P_2S_5$-based compound. In addition, the fraction of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$LiI$-$LiBr$, and the like can be exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$P_2S_5$-$LiCl$, and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous material.

Two or more solid electrolytes can be jointly used as long as the effect of the invention is not impaired.

(Conductive material and binder)

As the conductive material that the positive electrode active material layer 111 of the present embodiment has, the materials described in the above-described (conductive material) can be used. In addition, as for the fraction of the conductive material in the positive electrode mixture, the fractions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 of the present embodiment has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of CAM, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.

In addition, the positive electrode active material layer 111 may be supported by the positive electrode current collector 112 by preparing a paste of a mixture of the CAM, the solid electrolyte, and the conductive material using an organic solvent to produce a positive electrode mixture, applying and drying the positive electrode mixture to be obtained on at least one surface of the positive electrode current collector 112, and calcining the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method of applying the positive electrode mixture to the positive electrode current collector 112, the methods described in the above-described section (positive electrode current collector) are exemplary example.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

As a method for supporting the negative electrode active material layer 121 by the negative electrode current collector 122, similar to the case of the positive electrode 110, a method in which the negative electrode active material layer 121 is formed by pressurization, a method in which a paste-form negative electrode mixture containing a negative electrode active material is applied and dried on the negative electrode current collector 122 and then the negative electrode active material layer 121 is compressed by pressing, and a method in which a paste-form negative electrode mixture containing a negative electrode active material is applied, dried and then calcined on the negative electrode current collector 122 are exemplary examples.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method such that the negative electrode electrolyte layer 121 comes into contact with the surface of the solid electrolyte layer 130.

In the lithium secondary battery configured as described above, since CAM is produced from the precursor of the present embodiment described above, it is possible to improve the discharge rate characteristics of lithium secondary batteries for which this CAM is used.

In addition, since positive electrodes having the above-described configuration have CAM having the above-described configuration, it is possible to improve the discharge rate characteristics of lithium secondary batteries.

Furthermore, the lithium secondary battery having the above-described configuration has the above-described positive electrode and thus becomes a secondary battery having high discharge rate characteristics.

Another aspect of the present invention includes the following aspects.

[10] A precursor containing at least Ni, in which $S/D_{50}$ is $3.0 \times 10^6$ to $10 \times 10^6$ m/g and A/B is 1.0 to 1.25.

[11] The precursor according to [10], in which C/D is 0.81 to 1.03.

[12] The precursor according to [10] or [11], in which the BET specific surface area is 10 to 40 $m^2$/g.

[13] The precursor according to any one of [10] to [12], in which $D_{50}$ is 3.0 to 6 $\mu$m.

[14] The precursor according to any one of [10] to [13] containing Ni and one or more elements selected from the group consisting of Co, Mn, and M1 in a mole ratio represented by the formula (I).

[15] A method for producing a precursor, including heating a metal composite hydroxide containing at least Ni and having a tap density of 0.90 to 1.8 g/$cm^3$ or less at 450 to 680°C.

[16] The method for producing a precursor according to [15], in which $D_{50}$ of the metal composite hydroxide is 2.5 to 6 $\mu$m.

[17] The method for producing a precursor according to [15] or [16], in which the metal composite hydroxide contains Ni and one or more elements selected from the group consisting of Co, Mn, and M1 in a mole ratio represented by the formula (I).

[18] A method for producing CAM, including mixing the precursor according to any one of [10] to [14] and a lithium compound to obtain a mixture, and calcining the mixture.

[Examples]

Hereinafter, the present invention will be described in detail by showing examples, but the present invention is not limited to the following description.

<Composition analysis measurement>

The composition analysis of a precursor that was produced by a method to be described below was carried out by the above-described method using an inductively coupled plasma emission spectrometer (SPS 3000, manufactured by Seiko Instruments Inc.).

<Measurement of BET specific surface area>

The BET specific surface area of the precursor was measured by the above-described method using a BET specific surface area meter (Macsorb (registered trademark) manufactured by Mountech Co., Ltd.).

<Measurement of A/B>

The powder X-ray diffraction measurement was carried out by the above-described method using an X-ray diffractometer (Ultima IV manufactured by Rigaku Corporation).

<Measurement of C/D>

After the powder X-ray diffraction pattern of the precursor was obtained, C/D was calculated by the above-described method using integrated powder X-ray analysis software JADE.

<Measurement of cumulative volume particle size>

$D_{50}$ of the precursor or a metal composite hydroxide was measured by the above-described method using a laser diffraction scattering particle size distribution measuring device (MASTERSIZER 2000 manufactured by Malvern Panalytical Ltd.).

<Measurement of tap density>

The tap density of the metal composite hydroxide was measured by the method described in JIS R 1628-1997.

<Production of positive electrode for lithium secondary battery >

A paste-like positive electrode mixture was prepared by adding and kneading CAM that was obtained by a production method to be described below, acetylene black, which was a conductive material, and PVdF, which was a binder, such that a composition of CAM:conductive material:binder = 92:5:3 (mass ratio) was formed. At the time of preparing the positive electrode mixture, NMP was used as an organic solvent.

The obtained positive electrode mixture was applied to an Al foil having a thickness of 40 $\mu$m, which was to serve as a current collector, and dried in a vacuum at 150°C for 8 hours, thereby obtaining a positive electrode for the lithium secondary battery. The electrode area of the positive electrode for the lithium secondary battery was set to 1.65 $cm^2$.

<Production of lithium secondary battery (coin-type half cell)>

The following operation was carried out in a glove box under an argon atmosphere.

The positive electrode for the lithium secondary battery produced in the section <Production of Positive electrode for lithium secondary battery> was placed on the lower lid of a part for a coin-type battery R2032 (manufactured by Hohsen Corp.) with the aluminum foil surface facing downward, and a laminated film separator (a 16 $\mu$m-thick laminate having a heat-resistant porous layer laminated on a polyethylene porous film) was placed on the positive electrode. An electrolytic solution (300 $\mu$l) was poured thereinto. As the electrolytic solution, an electrolytic solution obtained by dissolving $LiPF_6$ in a liquid mixture of ethylene carbonate, dimethyl carbonate, and ethyl methyl carbonate in a volume ratio of 16: 10:74 so as to be 1.3 mol/L and dissolving 1.0% of vinylene carbonate was used.

Next, metal lithium was used as a negative electrode, and the negative electrode was placed on the upper side of the laminated film separator. An upper lid was placed through a gasket and caulked using a caulking machine, thereby producing a lithium secondary battery (coin-type half cell R2032; hereinafter, referred to as the "coin-type half cell" in some cases).

<Discharge rate test>

The discharge rate characteristics were evaluated by the above-described method using the coin-type half cell produced by the above-described method, and the 5CA/1CA discharge capacity ratio was obtained. The higher the 5CA/1CA discharge capacity ratio, the higher the discharge rate characteristics, and the higher output the lithium secondary battery exhibits.

Example 1

After water was poured into a reaction vessel equipped with a stirrer and an overflow pipe, an aqueous solution of sodium hydroxide was added thereto, and the liquid temperature was held at 50°C.

A nickel sulfate aqueous solution, a cobalt sulfate aqueous solution, and a manganese sulfate aqueous solution were mixed together such that the atomic ratio of Ni, Co, and Mn reached 0.88:0.08:0.04, thereby preparing a raw material-mixed liquid.

Next, the raw material-mixed solution and an ammonium sulfate aqueous solution, as a complexing agent, were continuously added into the reaction vessel under stirring. An aqueous solution of sodium hydroxide was timely added dropwise to 500 L of the solution in the reaction vessel while being stirred at a stirring speed of 750 rpm such that the pH of the solution in the reaction vessel reached 12.4 (measured temperature: 40°C). After 12.5 hours, the dropwise addition of the aqueous solution of sodium hydroxide was stopped, and a reaction precipitate 1 was obtained.

The reaction precipitate 1 was washed, dehydrated, dried, and sieved, and a metal composite hydroxide 1 containing Ni, Co and Mn was obtained. The tap density of the metal composite hydroxide 1 was 1.56 g/cm$^3$.

The metal composite hydroxide 1 was oxidized by being held and heated at 650°C for 5 hours in the atmospheric atmosphere and cooled to room temperature, thereby obtaining a precursor 1. As a result of carrying out the composition analysis of the precursor 1 and comparing the composition with the composition formula (1), y was 0.08, z was 0.04, and w was 0.

Lithium hydroxide was weighed so that the amount (mole ratio) of Li with respect to the total amount 1 of Ni, Co, and Mn that were contained in the precursor 1 reached 1.1. Potassium sulfate, which was an inert melting agent, was weighed so that the amount (mole ratio) of potassium sulfate with respect to the total amount of potassium sulfate and lithium hydroxide reached 10 mol%. The precursor 1, lithium hydroxide, and potassium sulfate were mixed with a mortar to obtain a mixture.

Next, the obtained mixture was held and calcined at 650°C for 5 hours in an oxygen atmosphere, then cooled to room temperature and then pulverized.

The pulverized product was held and calcined at 850°C for 5 hours in an oxygen atmosphere and then cooled to room temperature, thereby obtaining a calcined substance. The obtained calcined substance was roughly crushed with a roll mill and pulverized with a disc mill (SUPERMASSCOLLOIDER MKCA6-2J manufactured by Masuko Sangyo Co., Ltd.) with a gap of 100 μm at 1200 rpm so that the D$_{50}$ reached 100 μm or less.

The pulverized product was injected into a pin mill (impact mill AVIS-100 manufactured by Millsystem Co., Ltd.) operated at a rotation speed of 16000 rpm and crushed, thereby obtaining a crushed powder 1.

The crushed powder 1 was dispersed in pure water at 5°C and then dehydrated. Furthermore, the powder was washed using pure water adjusted to a liquid temperature of 5°C, dehydrated, and calcined at 760°C for 5 hours under an atmospheric atmosphere to carry out a heat treatment, thereby obtaining powder-form CAM-1.

Example 2

A metal composite hydroxide 2 was obtained by the same operation as in Example 1. The tap density of the metal composite hydroxide 2 was 1.56 g/cm$^3$.

The metal composite hydroxide 2 was held and heated at 500°C for 5 hours in an oxygen atmosphere and cooled to room temperature, thereby obtaining a precursor 2.

Lithium hydroxide was weighed so that the amount of Li to the total amount of 1 of Ni, Co, and Mn that were contained in the precursor 2 (mole ratio) became 1.1, and the precursor 2 and lithium hydroxide were mixed in a mortar, thereby obtaining a mixture.

Next, the obtained mixture was held and calcined at 790°C for 10 hours in an oxygen atmosphere and then cooled to room temperature, thereby obtaining a calcined substance. The obtained calcined substance was crushed with a mortar, dispersed in pure water (5°C), and then dehydrated. Furthermore, the powder was washed using pure water adjusted to a liquid temperature of 5°C, dehydrated, and calcined at 760°C for 5 hours under an atmospheric atmosphere to carry out a heat treatment, thereby obtaining powder-form CAM-2.

Example 3

After water was poured into a reaction vessel equipped with a stirrer and an overflow pipe, an aqueous solution of sodium hydroxide was added thereto, and the liquid temperature was held at 70°C.

A nickel sulfate aqueous solution, a cobalt sulfate aqueous solution, and a manganese sulfate aqueous solution were mixed together such that the atomic ratio of Ni, Co, and Mn reached 0.91:0.07:0.02, thereby preparing a raw material-mixed liquid.

Next, the raw material-mixed solution and an ammonium sulfate aqueous solution, as a complexing agent, were continuously added into the reaction vessel under stirring. An aqueous solution of sodium hydroxide was timely added dropwise to 15 L of the solution in the reaction vessel while being stirred at a stirring speed of 1500 rpm such that the pH of the solution in the reaction vessel reached 10.6 (measured temperature: 40°C). After 12.5 hours, the dropwise addition of the aqueous solution of sodium hydroxide was stopped, and a reaction precipitate 3 was obtained.

The reaction precipitate 3 was washed, dehydrated, dried, and sieved, and a metal composite hydroxide 3 containing Ni, Co and Mn was obtained. The tap density of the metal composite hydroxide 3 was 0.99 g/cm$^3$.

The metal composite hydroxide 3 was oxidized by being held and heated at 650°C for 5 hours in an oxygen atmosphere and cooled to room temperature, thereby obtaining a precursor 3. As a result of carrying out the composition analysis of the precursor 3 and comparing the composition with the composition formula (I), y was 0.07, z was 0.02, and w was 0.

Lithium hydroxide was weighed so that the amount (mole ratio) of Li with respect to the total amount 1 of Ni, Co, and Mn that were contained in the precursor 3 reached 1.1. Potassium carbonate, which was an inert melting agent, was weighed so that the amount (mole ratio) of potassium carbonate with respect to the total amount of potassium carbonate and lithium hydroxide reached 10 mol%. The precursor 3, lithium hydroxide, and potassium carbonate were mixed with a mortar to obtain a mixture.

Next, the obtained mixture was held and calcined at 790°C for 10 hours in an oxygen atmosphere and then cooled to room temperature, thereby obtaining a calcined substance. The obtained calcined substance was crushed with a mortar, dispersed in pure water (5°C), and then dehydrated. Furthermore, the powder was washed using pure water adjusted to a liquid temperature of 5°C, dehydrated, and calcined at 760°C for 5 hours under an oxygen atmosphere to carry out a heat treatment, thereby obtaining powder-form CAM-3.

Comparative Example 1

A metal composite hydroxide C1 was obtained by the same operation as in Example 1. The tap density of the metal composite hydroxide C1 was 1.56 g/cm$^3$.

The metal composite hydroxide C1 was held and heated at 300°C for 5 hours in an oxygen atmosphere and cooled to room temperature, thereby obtaining a precursor C1.

Lithium hydroxide was weighed so that the amount (mole ratio) of Li with respect to the total amount 1 of Ni, Co, and Mn that were contained in the precursor C1 reached 1.1. Potassium carbonate, which was an inert melting agent, was weighed so that the amount (mole ratio) of potassium carbonate with respect to the total amount of potassium carbonate and lithium hydroxide reached 10 mol%. The precursor C1, lithium hydroxide, and potassium carbonate were mixed with a mortar to obtain a mixture.

Next, the obtained mixture was held and calcined at 790°C for 10 hours in an oxygen atmosphere and then cooled to room temperature, thereby obtaining a calcined substance. The obtained calcined substance was crushed with a mortar, dispersed in pure water (5°C), and then dehydrated. Furthermore, the powder was washed using pure water adjusted to a liquid temperature of 5°C, dehydrated, and calcined at 760°C for 5 hours under an oxygen atmosphere to carry out a heat treatment, thereby obtaining powder-form CAM-C1.

Comparative Example 2

Using a device having the inside of a reaction vessel equipped with a stirrer and an overflow pipe, a condensation tank connected to the overflow pipe, and a mechanism for carrying out circulation from the condensation tank to the reaction vessel, water was put into the reaction vessel, then, an aqueous solution of sodium hydroxide was added, and the liquid temperature was held at 50°C.

A nickel sulfate aqueous solution, a cobalt sulfate aqueous solution, and a manganese sulfate aqueous solution were mixed together such that the atomic ratio of Ni, Co, and Mn reached 0.91 :0.05:0.04, thereby preparing a raw material-mixed liquid.

Next, 30 g of ammonium sulfate crystals with respect to a volume of 1 L of the reaction vessel were injected into the reaction vessel, and this raw material-mixed solution and an ammonium sulfate aqueous solution were continuously added as a complexing agent under stirring. An aqueous solution of sodium hydroxide was timely added dropwise to 15 L of the solution in the reaction vessel while being stirred at a stirring speed of 1500 rpm such that the pH of the solution in the reaction vessel reached 12.5 (measured temperature: 40°C). After 26 hours, the dropwise addition of the aqueous solution of sodium hydroxide was stopped, and a reaction precipitate C2 was obtained.

The reaction precipitate C2 was washed, dehydrated, dried, and sieved, and a metal composite hydroxide C2 containing Ni, Co and Mn was obtained. The tap density of the metal composite hydroxide C2 was 0.57 g/cm$^3$. The

metal composite hydroxide C2 was used as a precursor C2.

Lithium hydroxide was weighed so that the amount (mole ratio) of Li with respect to the total amount 1 of Ni, Co, and Mn that were contained in the precursor C2 reached 1.2. Potassium sulfate, which was an inert melting agent, was weighed so that the amount (mole ratio) of potassium sulfate with respect to the total amount of potassium sulfate and lithium hydroxide reached 10 mol%. The precursor C2, lithium hydroxide, and potassium sulfate were mixed with a mortar to obtain a mixture.

Next, the obtained mixture was held and calcined at 880°C for 5 hours in an oxygen atmosphere and then cooled to room temperature, thereby obtaining a calcined substance. The obtained calcined substance was crushed with a mortar, dispersed in pure water (5°C), and then dehydrated. Furthermore, the powder was washed using pure water adjusted to a liquid temperature of 5°C, dehydrated, and calcined at 760°C for 5 hours under an oxygen atmosphere to carry out a heat treatment, thereby obtaining powder-form CAM-C2.

Comparative Example 3

After water was poured into a reaction vessel equipped with a stirrer and an overflow pipe, an aqueous solution of sodium hydroxide was added thereto, and the liquid temperature was held at 60°C.

A nickel sulfate aqueous solution, a cobalt sulfate aqueous solution, and a manganese sulfate aqueous solution were mixed together such that the atomic ratio of Ni, Co, and Mn reached 0.91:0.05:0.04, thereby preparing a raw material-mixed liquid.

Next, 1 g of ammonium sulfate crystals with respect to a volume of 1 L of the reaction vessel were injected into the reaction vessel, and this raw material-mixed solution and an ammonium sulfate aqueous solution were continuously added as a complexing agent under stirring. An aqueous solution of sodium hydroxide was timely added dropwise to 500 L of the solution in the reaction vessel while being stirred at a stirring speed of 750 rpm such that the pH of the solution in the reaction vessel reached 11.6 (measured temperature: 40°C). After 12.5 hours, the dropwise addition of the aqueous solution of sodium hydroxide was stopped, and a reaction precipitate C3 was obtained.

The reaction precipitate C3 was washed, dehydrated, dried, and sieved, and a metal composite hydroxide C3 containing Ni, Co and Mn was obtained. The tap density of the metal composite hydroxide 1 was 1.67 g/cm$^3$.

The metal composite hydroxide C3 was oxidized by being held and heated at 800°C for 5 hours in an oxygen atmosphere and cooled to room temperature, thereby obtaining a precursor C3. As a result of carrying out the composition analysis of the precursor C3 and comparing the composition with the composition formula (I), y was 0.05, z was 0.04, and w was 0.

Lithium hydroxide was weighed so that the amount (mole ratio) of Li with respect to the total amount 1 of Ni, Co, and Mn that were contained in the precursor C3 reached 1.1. Potassium carbonate, which was an inert melting agent, was weighed so that the amount (mole ratio) of potassium carbonate with respect to the total amount of potassium carbonate and lithium hydroxide reached 10 mol%. The precursor C3, lithium hydroxide, and potassium carbonate were mixed with a mortar to obtain a mixture.

Next, the obtained mixture was held and calcined at 760°C for 10 hours in an oxygen atmosphere and then cooled to room temperature, thereby obtaining a calcined substance. The obtained calcined substance was crushed with a mortar, dispersed in pure water (5°C), and then dehydrated. Furthermore, the powder was washed using pure water adjusted to a liquid temperature of 5°C, dehydrated, and calcined at 760°C for 5 hours under an oxygen atmosphere to carry out a heat treatment, thereby obtaining powder-form CAM-C3.

Comparative Example 4

Using a device having a reaction vessel equipped with a stirrer and an overflow pipe, a condensation tank connected to the overflow pipe, and a mechanism for carrying out circulation from the condensation tank to the reaction vessel, water was put into the reaction vessel, then, an aqueous solution of sodium hydroxide was added, and the liquid temperature was held at 60°C.

A nickel sulfate aqueous solution, a cobalt sulfate aqueous solution, and a manganese sulfate aqueous solution were mixed together such that the atomic ratio of Ni, Co, and Mn reached 0.88:0.08:0.04, thereby preparing a raw material-mixed liquid.

30 g of ammonium sulfate crystals with respect to a volume of 1 L of the reaction vessel were injected into the reaction vessel, and this raw material-mixed solution and an ammonium sulfate aqueous solution were continuously added as a complexing agent under stirring. An aqueous solution of sodium hydroxide was timely added dropwise to 15 L of the solution in the reaction vessel while being stirred at a stirring speed of 1500 rpm such that the pH of the solution in the reaction vessel reached 12.5 (measured temperature: 40°C). After 20 hours, the dropwise addition of the aqueous solution of sodium hydroxide was stopped, and a reaction precipitate C4 was obtained.

The reaction precipitate C4 was washed, dehydrated, dried, and sieved, and a metal composite hydroxide C4 containing Ni, Co and Mn was obtained. The tap density of the metal composite hydroxide C4 was 0.56 g/cm$^3$.

A metal composite hydroxide C4 was oxidized by the same operation as in Example 1, thereby obtaining a precursor C4. As a result of carrying out the composition analysis of the precursor C4 and comparing the composition with the composition formula (I), y was 0.08, z was 0.04, and w was 0.

The Precursor C4, lithium hydroxide, and potassium carbonate were calcined by the same operation as in Comparative Example 1, thereby obtaining powder-form CAM-C4.

Table 1 shows the production conditions of CAM-1 to 3 and C1 to C4 of Examples 1 to 3 and Comparative Examples 1 to 4 and the composition ratios of the precursors 1 to 3 and the precursors C1 to C4.

Table 2 shows the BET specific surface areas S, $D_{50}$, $S/D_{50}$, A/B, and C/D of the precursors 1 to 3 and the precursors C1 to C4 of Examples 1 to 3 and Comparative Examples 1 to 4 and the discharge rate characteristics of coin-type half cells for which CAM-1 to 3 and CAM-C1 to C4 were used.

[Table 1]

| | y:z:w | Tap density of metal composite hydroxide (g/cm$^3$) | $D_{50}$ of metal composite hydroxide ($\mu$m) | Heating temperature of metal composite hydroxide (°C) | Calcining temperature (°C) | Inert melting agent |
|---|---|---|---|---|---|---|
| Example 1 | 0.08:0.04:0 | 1.56 | 3.07 | 650 | 850 | K$_2$SO$_4$ |
| Example 2 | 0.08:0.04:0 | 1.56 | 3.07 | 500 | 790 | None |
| Example 3 | 0.07:0.02:0 | 0.99 | 4.09 | 650 | 790 | K$_2$CO$_3$ |
| Comparative Example 1 | 0.08:0.04:0 | 1.56 | 3.07 | 300 | 790 | K$_2$CO$_3$ |
| Comparative Example 2 | 0.05:0.04:0 | 0.57 | 2.12 | N/A | 880 | K$_2$SO$_4$ |
| Comparative Example 3 | 0.05:0.04:0 | 1.67 | 4.10 | 800 | 760 | K$_2$CO$_3$ |
| Comparative Example 4 | 0.08:0.04:0 | 0.56 | 1.69 | 650 | 790 | K$_2$CO$_3$ |

[Table 2]

| | BET specific surface area (m$^2$/g) | $D_{50}$ ($\mu$m) | BET specific surface area/$D_{50}$ ($10^6$ m/g) | Integrated intensity A/ integrated intensity B | Half-value width C/ halfvalue width D | Discharge rate characteristics (%) |
|---|---|---|---|---|---|---|
| Example 1 | 16.3 | 4.3 | 3.8 | 1.22 | 0.83 | 91.8 |
| Example 2 | 28.5 | 3.2 | 9.0 | 1.22 | 1.01 | 89.1 |
| Example 3 | 21.0 | 4.2 | 5.0 | 1.25 | 0.83 | 90.3 |
| Comparative Example 1 | 36.6 | 3.2 | 11.4 | 0.80 | 1.06 | 87.2 |

(continued)

|  | BET specific surface area (m²/g) | $D_{50}$ (μm) | BET specific surface area/$D_{50}$ ($10^6$ m/g) | Integrated intensity A/ integrated intensity B | Half-value width C/ halfvalue width D | Discharge rate characteristics (%) |
|---|---|---|---|---|---|---|
| Comparative Example 2 | 45.3 | 2.1 | 21.4 | - | - | 80.1 |
| Comparative Example 3 | 5.2 | 4.0 | 1.3 | 1.11 | 0.76 | 83.3 |
| Comparative Example 4 | 30.0 | 1.5 | 20.0 | 1.34 | 0.88 | 76.0 |

As shown in Tables 1 and 2, in Examples 1 to 3, the metal composite hydroxides having a tap density of 0.6 g/cm³ or more and 2.0 g/cm³ or less are heated at 400°C or higher and 700°C or lower. As a result, $S/D_{50}$ was $2 \times 10^6$ m/g or more and $11 \times 10^6$ m/g or less, and A/B was more than 0.80 and 1.33 or less. As a result, the discharge rate characteristics of the lithium secondary batteries became high values of 89% or more.

On the other hand, in Comparative Example 1 in which the heating temperature of the metal composite hydroxide was 300°C, $S/D_{50}$ was $11.4 \times 10^6$ m/g and A/B was 0.80. As a result, the discharge rate characteristics of the lithium secondary battery were 87.2%.

In Comparative Example 2 in which the metal composite hydroxide was not oxidized, $S/D_{50}$ was $21.4 \times 10^6$ m/g. In addition, since no peak corresponding to the integrated intensity A was observed, it was not possible to calculate A/B. As a result, the discharge rate characteristics of the lithium secondary battery were 80.1%.

In Comparative Example 3 in which the heating temperature of the metal composite hydroxide was 800°C, the heating temperature of the metal composite hydroxide was 800°C, and $S/D_{50}$ became a small value of $1.30 \times 10^6$ m/g. As a result, the discharge rate characteristics of the lithium secondary battery were 83.3%.

In Comparative Example 4 in which the metal composite hydroxide having a tap density of 0.56 g/cm³ or more was heated at 650°C, $S/D_{50}$ became a large value of $20.0 \times 10^6$ m/g. As a result, the discharge rate characteristics of the lithium secondary battery were 76.0%.

[Industrial Applicability]

According to the present invention, it is possible to provide a precursor that improves the discharge rate characteristics of lithium secondary batteries, a method for producing the precursor, and a method for producing a CAM in which this precursor is used.

[Reference Signs List]

1: Separator
2: Positive electrode
3: Negative electrode
4: Electrode group
5: Battery can
6: Electrolytic solution
7: Top insulator
8: Sealing body
10: Lithium secondary battery
21: Positive electrode lead
31: Negative electrode lead
100: Laminate
110: Positive electrode
111: Positive electrode active material layer
112: Positive electrode current collector
113: External terminal

120: Negative electrode
121: Negative electrode active material layer
122: Negative electrode current collector
123: External terminal
130: Solid electrolyte layer
200: Exterior body
200a: Opening portion
1000: All-solid-state lithium secondary battery

**Claims**

1. A positive electrode active material precursor for a lithium secondary battery comprising at least Ni,

   wherein $S/D_{50}$ that is a ratio of a BET specific surface area S to a 50% cumulative volume particle size $D_{50}$ is $2 \times 10^6$ to $20 \times 10^6$ m/g, and
   in powder X-ray diffraction measurement using a CuK$\alpha$ ray, A/B that is a ratio of an integrated intensity A of a diffraction peak within a range of $2\theta = 37.5 \pm 1°$ to an integrated intensity B of a diffraction peak within a range of $2\theta = 62.8 \pm 1°$ is more than 0.80 and 1.33 or less.

2. The positive electrode active material precursor for the lithium secondary battery according to Claim 1, wherein, in the powder X-ray diffraction measurement using the CuK$\alpha$ ray, C/D that is a ratio of a half-width value C of a diffraction peak within a range of $2\theta = 43.5 \pm 1°$ to a half-width value D of a diffraction peak within a range of $2\theta = 62.8 \pm 1°$ is 0.80 to 1.05.

3. The positive electrode active material precursor for the lithium secondary battery according to Claim 1 or 2, wherein the BET specific surface area is 6 to 45 m²/g.

4. The positive electrode active material precursor for the lithium secondary battery according to any one of Claims 1 to 3, wherein the 50% cumulative volume particle size $D_{50}$ is 2 to 10 μm.

5. The positive electrode active material precursor for the lithium secondary battery according to any one of Claims 1 to 4,

   wherein, in a mole ratio represented by the following formula (I), Ni and one or more elements selected from the group consisting of Co, Mn, and M1 are contained, and
   the M1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn,

   $$Ni:Co:Mn:M1 = (1 - y - z - w):y:z:w \ldots \qquad (I)$$

   the formula (I) satisfies $0 \leq y \leq 0.4$, $0 \leq z \leq 0.4$, $0 \leq w \leq 0.1$, and $0 < y + z + w$.

6. A method for producing a positive electrode active material precursor for a lithium secondary battery, the method comprising:
   heating a metal composite hydroxide containing at least Ni and having a tap density of 0.60 to 2.0 g/cm³ at 400 to 700°C.

7. The method for producing the positive electrode active material precursor for the lithium secondary battery according to Claim 6, wherein a 50% cumulative volume particle size $D_{50}$ of the metal composite hydroxide is 2 μm or more and less than 10 μm.

8. The method for producing the positive electrode active material precursor for the lithium secondary battery according to Claim 6 or 7,

   wherein the metal composite hydroxide contains Ni and one or more elements selected from the group consisting of Co, Mn, and M1 in a mole ratio represented by the following formula (I), and
   the M1 represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn,

$$Ni:Co:Mn:M1 = (1 - y - z - w):y:z:w \quad ... \qquad (I)$$

the formula (1) satisfies $0 \le y \le 0.4$, $0 \le z \le 0.4$, $0 \le w \le 0.1$, and $0 < y + z + w$.

9.  A method for producing a positive electrode active material for a lithium secondary battery, the method comprising:

    mixing the positive electrode active material precursor for the lithium secondary battery according to any one of Claims 1 to 5 and a lithium compound to obtain a mixture; and
    calcining the mixture.

FIG. 1

FIG. 2

FIG. 3

FIG. 4

**EP 4 148 831 A1**

## INTERNATIONAL SEARCH REPORT

| | International application No. |
|---|---|
| | PCT/JP2021/016771 |

A. CLASSIFICATION OF SUBJECT MATTER
H01M 4/505(2010.01)i; H01M 4/525(2010.01)i
FI: H01M4/525; H01M4/505
According to International Patent Classification (IPC) or to both national classification and IPC

B. FIELDS SEARCHED

Minimum documentation searched (classification system followed by classification symbols)
H01M4/505; H01M4/525

Documentation searched other than minimum documentation to the extent that such documents are included in the fields searched
Published examined utility model applications of Japan    1922–1996
Published unexamined utility model applications of Japan    1971–2021
Registered utility model specifications of Japan    1996–2021
Published registered utility model applications of Japan    1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2016-17017 A (ASAHI GLASS CO., LTD.) 01 February 2016 (2016-02-01) paragraphs [0017], [0088]-[0091], [0103] | 6–8<br>1–5, 9 |
| X<br>A | JP 2019-133881 A (JX NIPPON MINING & METALS CORPORATION) 08 August 2019 (2019-08-08) paragraphs [0046]-[0047], [0131] | 6, 8<br>1–5, 7, 9 |
| X<br>A | JP 2008-258160 A (MATSUSHITA ELECTRIC INDUSTRIAL CO., LTD.) 23 October 2008 (2008-10-23) paragraphs [0093]-[0097] | 6<br>1–5, 7–9 |
| X<br>A | JP 2020-510981 A (UMICORE) 09 April 2020 (2020-04-09) paragraphs [0058]-[0063], [0069], [0076] | 6–8<br>1–5, 9 |
| X<br>A | JP 2019-149222 A (GS YUASA INTERNATIONAL LTD.) 05 September 2019 (2019-09-05) paragraphs [0055], [0081]-[0082], [0107] | 6–7<br>1–5, 8–9 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 July 2021 (01.07.2021) | 13 July 2021 (13.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT

International application No.

PCT/JP2021/016771

C (Continuation).  DOCUMENTS CONSIDERED TO BE RELEVANT

| Category* | Citation of document, with indication, where appropriate, of the relevant passages | Relevant to claim No. |
|---|---|---|
| X | JP 2015-523955 A (LG CHEM, LTD.) 20 August 2015 (2015-08-20) paragraphs [0071]-[0075], [0080] | 6-7 |
| A | | 1-5, 8-9 |

Form PCT/ISA/210 (continuation of second sheet) (January 2015)

**INTERNATIONAL SEARCH REPORT**
Information on patent family members

International application no.

PCT/JP2021/016771

| Patent Documents referred in the Report | Publication Date | Patent Family | Publication Date |
|---|---|---|---|
| JP 2016-17017 A | 01 Feb. 2016 | (Family: none) | |
| JP 2019-133881 A | 08 Aug. 2019 | (Family: none) | |
| JP 2008-258160 A | 23 Oct. 2008 | US 2008/0268347 A1 paragraphs [0176]- [0182] WO 2008/126370 A1 EP 2071650 A1 KR 10-2009-0080939 A CN 101548416 A | |
| JP 2020-510981 A | 09 Apr. 2020 | US 2020/0006769 A1 paragraphs [0089]- [0094], tables 3, 5 WO 2018/167533 A1 EP 3596766 A1 KR 10-2019-0121394 A CN 110663127 A | |
| JP 2019-149222 A | 05 Sep. 2019 | WO 2018/012385 A1 paragraphs [0055], [0081]-[0082], [0109]-[0110] | |
| JP 2015-523955 A | 20 Aug. 2015 | US 2015/0090926 A1 paragraphs [0078]- [0082], [0090] WO 2014/010862 A1 EP 2871161 A1 KR 10-2014-0007748 A KR 10-2014-0130376 A CN 104364201 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020082107 A
- JP 2010015959 A
- JP 2002201028 A
- WO 2019098384 A1
- US 20200274158 A1
- JP 2000030686 A
- US 20090111025 A1

- JP 2004095400 A
- WO 2020208872 A1
- US 20160233510 A1
- US 20120251871 A1
- US 20180159169 A1
- US 20200259213 A1